(19) Europäisches Patentamt
European Patent Office
Office européen des brevets

(11) EP 2 302 071 B1

(12) **EUROPEAN PATENT SPECIFICATION**

(45) Date of publication and mention of the grant of the patent:
**20.06.2012 Bulletin 2012/25**

(51) Int Cl.:
***C12Q 1/68*** *(2006.01)* ***G01N 33/543*** *(2006.01)*

(21) Application number: **10154427.8**

(22) Date of filing: **23.02.2010**

(54) **Target-detecting device and method for producing the same**

Zielerkennungsvorrichtung und Herstellungsverfahren dafür

Dispositif de détection de cible et son procédé de fabrication

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **28.09.2009 JP 2009222878**

(43) Date of publication of application:
**30.03.2011 Bulletin 2011/13**

(73) Proprietor: **Fujitsu Limited**
**Kawasaki-shi, Kanagawa 211-8588 (JP)**

(72) Inventor: **Arinaga, Kenji**
**Kawasaki-shi Kanagawa 211-8588 (JP)**

(74) Representative: **Fenlon, Christine Lesley**
**Haseltine Lake LLP**
**Lincoln House, 5th Floor**
**300 High Holborn**
**London WC1V 7JH (GB)**

(56) References cited:
**WO-A2-2009/017878 US-A1- 2005 118 603**

- **CHRISTOPHER BATCHELOR-MCAULEY, GREGORY G. WILDGOOSE, RICHARD G. COMPTON: "The physiochemical aspects of DNA sensing using electrochemical methods", BIOSENSORS AND BIOELECTRONICS, vol. 24, 10 February 2009 (2009-02-10), pages 3183-3190, XP002617649,**
- **ARINAGA ET AL: "Controlling the surface density of DNA on gold by electrically induced desorption", BIOSENSORS AND BIOELECTRONICS, ELSEVIER BV, NL, vol. 23, no. 3, 3 October 2007 (2007-10-03), pages 326-331, XP022284365, ISSN: 0956-5663, DOI: DOI: 10.1016/J.BIOS.2007.04.012**
- **SENDNER C ET AL: "Dynamics of end grafted DNA molecules and possible biosensor applications", PHYSICA STATUS SOLIDI. A: APPLIED RESEARCH, WILEY - VCH VERLAG, BERLIN, DE, vol. 203, no. 14, 10 November 2006 (2006-11-10), pages 3476-3491, XP002571753, ISSN: 0031-8957, DOI: DOI:10.1002/PSSA. 200622444 [retrieved on 2006-11-08]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 302 071 B1

## Description

FIELD

The embodiments discussed herein relate to a target-detecting device and a method for producing the same.

BACKGROUND

In recent years, "Nano Bio" or "Bio Nano" has become a key word, and extensive studies have been conducted on development of bio chips and bio detection devices which realize, on solid substrates, conventional biological experiments using test tubes, flasks and other instruments. Chips capable of evaluating or detecting a specific nucleic acid (target molecule) are called a DNA chip (RNA chip) and widely used for gene analysis (see, for example, International Publication No. WO06/075735 pamphlet). Also, chips capable of detecting a specific protein are called a protein chip and currently under development.

Gene analysis using such DNA and RNA chips are applied in various fields such as life science, food industry, agriculture, drug discovery and medical treatment. The basic principle of the DNA chip (RNA chip) is as follows. Specifically, target DNAs (RNAs) (test substances) labeled (visualized) with, for example, fluorescent dyes are hybridized with complementary DNAs (RNAs) immobilized on a substrate to form double strands, and the presence or absence of the target DNAs (RNAs) or the sequence thereof is determined on the basis of optical signals obtained from the labels (e.g., fluorescent dyes). In this method, it is essential to label target DNAs (RNAs). Thus, it is necessary to ensure labeling of target DNAs (RNAs) and to improve the SN ratio by reducing the signal intensity attributed to non-specifically adsorbed labeled DNAs (RNAs), which do not form double strands together with complementary DNAs (RNAs) immobilized on the substrate. Therefore, this method additionally requires a labeling step of labeling a sample containing target DNAs (RNAs) and a washing step of removing non-specifically adsorbed DNAs (RNAs). These additional steps are time-consuming. Moreover, when non-specifically adsorbed DNAs (RNAs) cannot be satisfactorily removed in the washing step, the SN ratio problematically decreases.

Japanese Patent No. 4230431 and other literatures disclose that an electrolyte is added to a solution containing charged molecules to be deposited on a substrate so as to control the deposition density thereof on the substrate. Furthermore, Japanese Patent Application Laid-Open (JP-A) No. 2007-202451 and other literatures disclose that an electrical potential is applied to a conductive substrate having a molecular film thereon so as to remove some molecules of the molecular film from the conductive substrate, thereby adjusting the density of the molecules in the molecular film to reduce steric hindrance among the molecules on the substrate. But, no reports have been presented on evaluation or detection of a target nucleic acid utilizing steric hindrance among molecules on a substrate.

SUMMARY

It is desirable to provide a target-detecting device in accordance with claim 1 capable of detecting a target nucleic acid in high accuracy and for a short time, and a method for producing the same, according to claim 7.

A target-detecting device according to the invention includes a substrate and a plurality of probes, one ends of which being immobilized on the substrate, wherein the probes each include, in parts thereof, a label which functions when distanced from the substrate and are capable of forming double strands together with target nucleic acids, and wherein the probes are arranged at such positions that, when the probes form double strands together with the target nucleic acids, steric hindrance occurs between one double strand and another double strand adjacent to the one double strand so as to distance the label from the substrate.

A method for producing a target-detecting device according to the invention includes a probe-arranging step of arranging probes on a substrate in such a number that, when the probes form double strands together with target nucleic acids, steric hindrance occurs between one double strand and another double strand adjacent to the one double strand so as to distance labels from the substrate.

BREIF DESCRIPTION OF DRAWINGS

Preferred features of the present invention will now be described, purely by way of example, with reference to the accompanying drawings, in which:

FIG. 1A-1D are an illustration for explaining a target-detecting device;

FIG. 2A-2C are an illustration for explaining the relationship between the surface density at which steric hindrance occurs between double strands, and the length of probes arranged on the substrate so that the points at which the probes are immobilized thereon are located at the centers of circles having the same radius shorter than the length of each probe, the circles being arranged on the substrate so that hexagons each being formed by connecting together

the centers of six circles in contact with one circle are regular hexagons which are tessellated on the substrate;

FIG. 3A-3B are an illustration of a DNA chip serving as a target-detecting device;

FIG. 3C is a graph indicating the relationship between the distance from a substrate and the fluorescent intensity;

FIG. 4 is a graph indicating the relationship between the deposition density of single-stranded oligonucleotides and the ion concentration of an electrolytic solution;

FIG. 5A-5D are an illustration for explaining Example 1;

FIG. 6A-6D are an illustration for explaining Example 2;

FIG. 7A-7C are an illustration for explaining Comparative Example 1; and

FIG. 8A-8C are an illustration for explaining Comparative Example 2.

DESCRIPTION OF EMBODIMENTS

(Target-detecting device) The target-detecting device includes at least a substrate and probes; and, if necessary, further includes other members.

<Substrate> The substrate is not particularly limited and may be appropriately selected depending on the purpose. Preferably, it is a conductive substrate. The structure thereof may be a single-layer structure or may be a multi-layer structure, for example. The conductive substrate may be formed of a conductive material in whole or may be formed by providing an insulative substrate with an electrode layer made of a conductive material.

The shape, size, surface characteristics, number, and the like of the substrate are not particularly limited and may be appropriately selected depending on the purpose. Examples of the shape include a flat plate shape, a circle shape and an ellipse shape. The size is not particularly limited and may be appropriately determined depending on the purpose. Examples of the surface characteristics include glossiness and roughness. These may be used individually or in combination.

Examples of suitable materials for the insulative substrate include quartz glass, silicon, silicon oxide, silicon nitride and sapphire. These may be used individually or in combination.

The conductive material or the material for the electrode layer is not particularly limited so long as it is conductive. Examples thereof include metals, alloys, conductive resins and carbon compounds. Examples of the metals include gold, platinum, silver, copper and zinc. Examples of the alloys include alloys of two or more different metals exemplified. Examples of the conductive resins include polyacetylene, polythiophene, polypyrrole, polyphenylene, polyphenylene vinylene and polyaniline. Examples of the carbon compounds include conductive carbon and conductive diamond. These may be used individually or in combination.

When the electrode layer is provided on the insulative substrate, in order to improve adhesiveness between the electrode layer and the insulative substrate, an adhesive layer may be formed therebetween.

The material, shape, structure, thickness, size, and the like of the adhesive layer are not particularly limited and may be appropriately selected depending on the purpose. Examples of the material include chromium and titanium. The structure is not particularly limited and may be appropriately selected depending on the purpose. It may be a single-layer structure or a multi-layer structure.

The size, shape, and the like of the electrode layer may be appropriately adjusted to a desired degree by coating its surface with an insulative film so as to make only a part of the electrode layer exposed. The number of the electrode layers is not particularly limited and may be appropriately selected depending on the purpose. It may be one or may be two or more.

The material, shape, structure, thickness, size, and the like of the insulative film are not particularly limited and may be appropriately selected from those known in the art depending on the purpose. Examples of suitable materials include amorphous glass, oxides (e.g., non-doped or doped $SiO_2$), nitrides (e.g., non-doped or doped $SiN_x$) and polymeric compounds (e.g., polyimides and photoresists). Examples of the photoresists include g-line resists, i-line resists, KrF resists, ArF resists, F2 resists and electron beam resists.

In the target-detecting device, in order to apply an electrical potential to the conductive substrate or electrode layer (work electrode), preferably provided are a counter electrode, a reference electrode and the like, which are different from the work electrode. Such electrode may be one or more in number. The counter electrode is arranged so as to face the conductive substrate or electrode layer (work electrode) and is an electrode for applying an electrical potential to them. The reference electrode is an electrode for adjusting the electrical potential with respect to the conductive substrate or electrode layer (work electrode). Adjustment of the electrical potential using the reference electrode is known as a three-electrode method.

When two or more of the conductive substrate or electrode layer (work electrode) are provided, applying or varying the electrical potential with respect to the conductive substrates or electrode layers (work electrodes) as desired and at different timings makes it possible to desorb the probes immobilized (bound) on each work electrode layer at different timings.

<Probe> The probe may be appropriately selected depending on the purpose without any limitation, so long

as it is immobilized on the substrate at one end thereof, contains a label in part thereof, and is capable of forming a double strand together with a target nucleic acid. Notably, in general, the probe is negatively charged in an aqueous solution.

The immobilization on the substrate is not particularly limited and may be appropriately selected depending on the purpose. Examples thereof include electrical bond, chemical bond, and adsorption.

The chemical bond is not particularly limited and may be appropriately selected depending on the purpose. Examples thereof include sulfur atom (S)-containing bonds such as bonds, between the probe and the conductive substrate, that contain a thiol group (-S-H), disulfide group (-S-S-) or the like. When probes each containing a thiol group (-S-H) or disulfide group (-S-S-) are bound to the conductive substrate, as described below, the bonds between the sulfur atoms (S) and the conductive substrate are cleaved through application of a specific electrical potential to the conductive substrate, desorbing some of the probes from the conductive substrate. As a result, the probe density is reduced through desorption of some of the probes and is adjusted to a desired degree.

The shape of the probe is not particularly limited and the shape may be appropriately selected depending on the purpose. Examples thereof include linear, granular, plate-like, and combinations of two or more of them. Among them, linear or the like is preferable.

The probe is not particularly limited and may be appropriately selected depending on the purpose. For example, preferred are polynucleotides containing a thiol group (-S-H) or a disulfide group (-S-S-) in parts thereof. Particularly preferred are DNAs, RNAs, and complexes of these and proteins, which contain a thiol group (-S-H) or a disulfide group (-S-S-) at their ends. The DNAs and RNAs are single-stranded.

The size or length of the probe is not particularly limited and may be appropriately determined depending on the purpose. When the probe is a polynucleotide, it is preferably composed of at least 6 bases, more preferably 6 bases to 1,000 bases, particularly preferably 10 bases to 150 bases.

The method for synthesizing the probe is not particularly limited and may be appropriately selected depending on the purpose. For example, the probe may be synthesized by any method such as a chemical synthesis method and a fermentative production method. The probe may be a synthesized one or a commercially available one.

-Label- The label is not particularly limited and may be appropriately selected depending on the purpose. Examples of suitable labels include fluorescent dyes and oxidation-reduction markers.

Notably, when the label is a fluorescent dye, the distance between the label and the substrate can be detected based on the fluorescent intensity measured. When the label is an oxidation-reduction marker, the distance between the label and the substrate can be detected based on the oxidation-reduction current measured.

--Fluorescent dye-- Particularly preferably used are fluorescent dyes which do not emit light during interaction with the substrate (metal) (for example, while the fluorescent dye is located close to the metal) even if irradiated with light having an absorbable wavelength, but when there is no interaction with the substrate (for example, when the fluorescent dye stays away from the metal), upon irradiation with light having an absorbable wavelength, they can emit light using the light energy. The fluorescent dye is not particularly limited and may be appropriately selected from those known in the art depending on the purpose. Examples of suitable fluorescent dyes include a compound having the following Structural Formula 1.

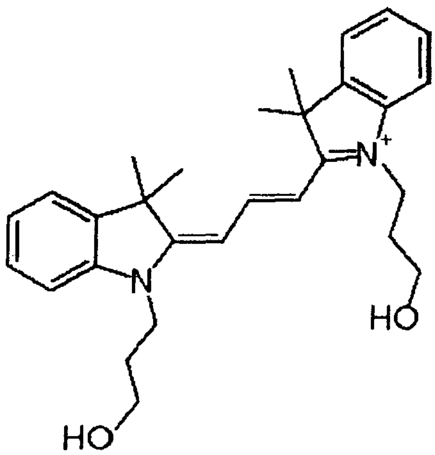

Structural Formula 1

--Oxidation-reduction marker-- The oxidation-reduction marker is not particularly limited and may be appropriately selected depending on the purpose. Examples thereof include a compound having the following Structural Formula 2 and a compound having the following Structural Formula 3.

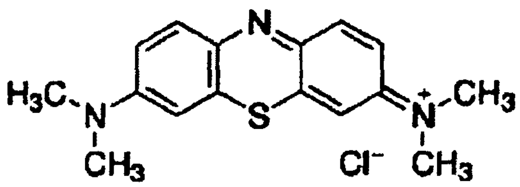

Structural Formula 2

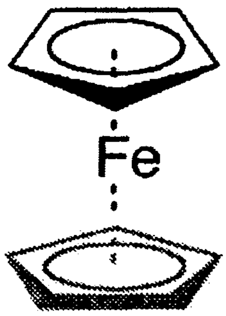

Structural Formula 3

-Target nucleic acid- The target nucleic acid is not particularly limited and may be appropriately selected depending on the purpose. Examples thereof include polynucleotides such as DNA and RNA. Specific examples of the polynucleotides include cancer-related genes, genes associated with genetic diseases, viral genes, bacterial genes, and genes exhibiting polymorphism which are called a risk factor of disease.

The shape of the target nucleic acid is not particularly limited and may be appropriately selected depending on the purpose. Examples thereof include linear, loop and three-dimensional conformation, with linear being preferred.

The length of the target nucleic acid is not particularly limited and may be appropriately selected depending on the purpose. It is preferably 3 bases to 2,000 bases, more preferably 6 bases to 1,000 bases, particularly preferably 10 bases to 200 bases.

The target nucleic acid composed of less than 3 bases is low in an ability to form a double strand and thus, the hybridization with the probe does not proceed in some cases. The target nucleic acid composed of more than 2,000 bases is hybridized with itself and thus, the formation of a double strand with the probe may be inhibited. When the length of the target nucleic acid falls within the particularly preferable range, it is advantageous in that the formation of a double strand smoothly proceeds.

The amount of the target nucleic acid added is not particularly limited and may be appropriately selected depending on the purpose. It is preferably a sufficient amount for all the probes to form double strands.

To obtain a sufficient amount of the target nucleic acid, the target nucleic acid may be amplified by, for example, polymerase chain reaction (PCR).

-Double strand- The double strand is a structure in which the probe and the target nucleic acid are bound to each other so as to form a double-helix structure.

Once a base of the probe is bound to a base of the target nucleic acid, presumably, the probe's bases adjacent thereto are successively bound to the target nucleic acid's bases adjacent thereto towards the substrate and the label. In the formation of the double strand, when the length of the probe is greater than that of the target nucleic acid, the formed double strand contains both part of the double-helix structure and part of the probe which does not form the double-helix structure together with the target nucleic acid. When the length of the target nucleic acid is greater than that of the probe, the formed double strand contains both part of the double-helix structure and part of the target nucleic acid which does not form the double-helix structure together with the probe.

The shape of the double strand formed through hybridization between the probe and the target nucleic acid is

not particularly limited. The formed double strand may be composed, for example, of a probe and a target nucleic acid longer than the probe, of a target nucleic acid and a probe longer than the target nucleic acid, and of a target nucleic acid and a probe which have the same length. In particular, preferably, the length of the target nucleic acid is almost the same as that of the probe.

As is widely known, the diameter of the double strand is 2 nm in an aqueous solution containing an appropriate amount of a salt.

Here, the diameter of the double strand refers to that of the double helix structure approximated to be a column.

The length of the double strand is not particularly limited and may be appropriately determined depending on the purpose. It is preferably at least 6 base pairs, more preferably 6 base pairs to 1,000 base pairs, particularly preferably 10 base pairs to 150 base pairs.

When the length is less than 6 base pairs, the force to form a double strand may become weak. Whereas when the length is more than 1,000 base pairs, the formation of a double strand is inhibited in some cases. When the length falls within the particularly preferable range, the formation of the double strand smoothly proceeds, which is advantageous.

The length of the double strand refers to that of the double-helix structure.

<Arrangement of probes on substrate> Arrangement of a plurality of the probes on the substrate is not particularly limited and may be determined depending on the purpose, so long as the probes are capable of forming double strands together with the target nucleic acids; and steric hindrance occurs between one double strand and another double strand adjacent to the one double strand so as to distance the labels from the substrate, when the probes form double strands together with the target nucleic acids. Here, the upper limit of the surface density of molecules which are arranged on a substrate in a hexagonaly packed array is theoretically $7.6 \times 10^{-10}$ mol/cm$^2$ ($4.6 \times 10^{14}$ molecules/cm$^2$). Thus, the surface density of the probes arranged is preferably equal to or lower than the above upper limit (see Journal of the American Chemical Society Vol. 113, pp. 2805-2810, 1991, Cindra A. Widrig, Carla A. Alves, Marc D. Porter).

In order for the probes to be "capable of forming double strands together with the target nucleic acids," the interval between points at which one probe of the probes and another probe adjacent to the one probe are immobilized on the substrate must be equal to or greater than the diameter of the double strand.

According to the invention, in order for "steric hindrance to occur between one double strand and another double strand adjacent to the one double strand so as to distance the labels from the substrate, when the probes form double strands together with the target nucleic acids," the interval between the points at which one probe of the probes and another probe adjacent to the one probe are immobilized on the substrate must be shorter than the total length of the one probe and the another probe.

As illustrated in FIG. 2A which is referred to below, assuming that circles A having the same radius r shorter than the length of each probe are arranged on the substrate so that hexagons each being formed by connecting together the centers of six circles in contact with one circle are regular hexagons which are tessellated on the substrate, the points at which the probes are immobilized on the substrate are preferably located at centers C of circles A.

In the case where the points at which the probes are immobilized on the substrate are located at the centers of circles having the same radius shorter than the length of the probe, the circles being arranged on the substrate so that hexagons each being formed by connecting together the centers of six circles in contact with one circle are regular hexagons which are tessellated on the substrate, when the surface density of the points at which the probes are immobilized on the substrate satisfies the following expression (1), steric hindrance occurs between one double strand and another adjacent double strand (which are formed of the probes and the target nucleic acids) so as to distance the labels from the substrate:

Surface density $> \sqrt{3}/(6X^2)$ ··· Expression (1)

where X represents an average length of the probes (single strands).

The surface density of the points at which the probes are immobilized on the substrate is controlled by adjusting the salt concentration of an electrolytic solution and the immersion time (see, for example, JP-A No. 4230431) or by electrically removing some of the ssDNAs which have been immobilized on a conductive substrate (see, for example, JP-A No. 2007-202451).

FIGs. 1A to 1C are drawings for describing a target-detecting device. FIGs. 1A to 1C exemplify DNA chips using a fluorescent dye for signal detection.

As illustrated in FIG. 1A, when a fluorescent dye 11 labeled at the top end of a DNA 10 approach a conductive substrate 12, the luminescence energy thereof transfers to the conductive substrate 12 (resonance energy transfer), leading to quenching or reduction of the light emission. For this reason, the luminescence intensity is proportional to the cube of the distance between the fluorescent dye and the substrate on the order of several nanometers, according to Rant, U., Arinaga, K., Fujita, S., Yokoyama, N., Abstreiter, G., Tornow, M., "Dynamic electrical switching of DNA layers on a metal surface," 2004. Nano Lett. 4, 2441-2445.

FIG. 1A schematically illustrates a method for detecting the state of the DNA 10 on the basis of the fluorescent intensity. Specifically, when the DNA 10 is in a standing state, the distance between the fluorescent dye 11 and the surface of the conductive substrate 12 is large, and the fluorescent intensity is high. In contrast, when the DNA 10 is in

a lying or contracting state, the distance between the fluorescent dye 11 and the surface of the conductive substrate 12 becomes small, and the fluorescent intensity is reduced.

FIG. 1B illustrates the state where single-stranded probe DNAs (ssDNAs) 15 for detection are relatively densely arranged. The single-stranded probe DNAs (ssDNAs) 15 are flexible, bendable and contractible, and thus are contracted on average on a substrate 17. As a result, the distance between a fluorescent dye 16 labeled on the top end and the surface of a substrate 17 is small. In this state, the fluorescent intensity measured is low.

When an aqueous solution containing target DNAs 18 is added to the substrate 17, hybridization immediately initiates and finally, double strands (dsDNAs) 20 are formed as illustrated in FIG. 1C. As has been known, the double strands (dsDNAs) 20 are stiff and take a rod-like shape on the scale of about hundreds nanometers. Thus, the double strands (dsDNAs) 20 cannot tilt considerably nor lie on the substrate 17 due to steric hindrance occurring between one double strand and other double strands adjacent to the one double strand. As a result, the double strands (dsDNAs) 20 are maintained relatively upright. Each of the double strands (dsDNAs) 20 is immobilized on the substrate 17 at only one end of the single-stranded probe DNA (ssDNA) 15 and thus, is thought to lie down as a result of being folded at the base (i.e., a portion close to the point at which the probe DNA is immobilized on the substrate). But, in the vicinity of room temperature which is a measurement temperature for commonly-used DNA chips, etc., or in the temperature range in which double strands are formed (4°C to 90°C), the top ends (fluorescent dyes 16) of the double strands rapidly move by thermal energy within hemispherical region A of FIG. 1D, whereby the double strands'top ends (fluorescent dyes 16) do not take a position lower than height B due to steric hindrance occurring among the double strands (dsDNAs) 20 adjacent to one another. In this state, the distance between the fluorescent dye 16 and the surface of the substrate 17 is large, and the fluorescent intensity measured is high. As described above, the single-stranded probe DNAs (ssDNAs) 15 are arranged at a surface density at which steric hindrance occurs, to thereby produce a DNA chip that can detect hybridization between the probes and the target DNAs 18 on the basis of an observable change in fluorescent intensity. In this DNA chip, since single-stranded probe DNAs (ssDNAs) 15 are labeled, non-labeled target DNAs can be used for detection, which does not require washing for preventing non-specific adsorption of labeled target DNAs and prevents decrease in the SN ratio due to non-specific adsorption of labeled target DNAs.

In the target-detecting device, the probe DNAs (ssDNAs) (complementary DNAs to target DNAs) are immobilized, at one ends thereof, on the conductive (metal) substrate at a surface density at which steric hindrance occurs among the formed double strands, the other ends thereof being labeled with fluorescent dyes. Specifically, the probe DNAs (ssDNAs) are immobilized so that the interval between the points at which the probe DNAs (ssDNAs) adjacent to one another are immobilized on the substrate is adjusted to be equal to or greater than the diameter of the double strand and to be smaller than the total length of one probe DNA (ssDNA) and another probe DNA (ssDNA) adjacent to the one probe DNA (ssDNA. In this target-detecting device, labeling of target DNAs is not required and thus, a solution containing non-labeled target DNAs is poured onto the substrate in order for the target DNAs to form double strands together with probe DNAs (ssDNAs). Notably, probe RNAs and target RNAs may be used instead of the probe DNAs and the target DNAs.

The single-stranded probe DNAs (ssDNAs) immobilized on the metal substrate are flexible (see Tinland, B., Pluen, A., Sturm, J., Weill, G., "Persistence Length of Single-Stranded DNA," 1997, Macromolecules 30, 5763-5765) and steric hindrance is difficult to occur therebetween. Thus, the single-stranded probe DNAs (ssDNAs) take a certain average position due to thermal fluctuation. The fluorescent dye, with which the probe DNAs (ssDNAs) are labeled, emits fluorescent light upon irradiation of excitation light, but part of the excitation energy is transferred to the metal substrate. Thus, the fluorescent intensity depends on the distance between the label and the substrate. Onto the substrate, target DNAs are applied so as to form double strands together with the probe DNA (ssDNAs) through hybridization. A double-stranded DNA is known to be stiffer than a single-stranded DNA, and to take a rod-like shape (see Marko, J. F., Siggia, E. D., "Stretching DNA," 1995 Macromolecules 28, 8759-8770). Thus, the double-stranded DNAs move rapidly within hemispherical region A of FIG. 1D, and stands to avoid steric hindrance caused by double-stranded DNAs adjacent to one another. As a result, the fluorescent dyes of the top ends (the other ends) of the double-stranded DNAs are distanced from the substrate, and the fluorescent intensity becomes higher than that before hybridization. On the basis of the change in fluorescent intensity, the presence or absence of the target DNA in a test solution or the sequence thereof can be determined. Also, labeling of the target DNAs in the test solution is not required. Furthermore, since the obtained signals attribute only hybridization, the SN ratio does not decrease due to non-specific adsorption of target DNAs.

Referring now to FIGs. 2A to 2C and FIGs. 3A to 3C, the principle of the target-detecting device is described in more detail.

First, single-stranded probe DNAs (ssDNAs) complementary to the target DNA are immobilized on a conductive substrate at a predetermined density. The immobilization of the single-stranded probe DNAs (ssDNAs) is performed by immersing the conductive substrate in a mixture of the single-stranded probe DNAs (ssDNAs) and an electrolytic solution. The density is controlled by adjusting the salt concentration of the electrolytic solution and the immersion time (see, for example, JP-A No. 4230431) or by electrically removing some of the ssDNAs which have been immobilized on a conductive substrate (see, for example, JP-A No. 2007-202451). The probes are negatively charged in an aqueous solution

and thus, as illustrated in FIG. 2A, the points at which the probes are immobilized on the substrate are thought to be located at centers C of circles A having the same radius r shorter than the length of the probe, the circles A being arranged on the substrate so that hexagons each being formed by connecting together the centers of six circles in contact with one circle are regular hexagons which are tessellated on the substrate. Here, given that length X of a probe (ssDNA) 31 immobilized on a substrate 30 is set (FIG. 2B), there can be determined a surface density of the points at which the probes are immobilized on the substrate, at which steric hindrance occurs to distance the labels from the substrate when double strands are formed (FIG. 2C). If the surface density is controlled so that it falls within the shaded region of FIG. 2C, steric hindrance occurs.

Notably, assuming that the points at which the probes are immobilized on the substrate are located at centers C of circles A whose radius r is the same as length X of the probe, the circles A being arranged on the substrate so that hexagons each being formed by connecting together the centers of six circles in contact with one circle are regular hexagons which are tessellated on the substrate (see FIG. 2A), the surface density of the points at which the probes are immobilized on the substrate satisfies the following equation (2). When the surface density of the points at which the probes are immobilized on the substrate is greater than that calculated by the following equation (2); i.e., the points at which the probes are immobilized on the substrate are located on centers C of circles A having the same radius r shorter than the length of the probe, the circles A being arranged on the substrate so that hexagons each being formed by connecting together the centers of six circles in contact with one circle are regular hexagons which are tessellated on the substrate, steric hindrance occurs upon formation of double strands:

$$\text{Surface desntiy} = 1/(2X \cdot 2\sqrt{3}X/2) = \sqrt{3}/(6X^2) \cdots \text{Equation (2)}$$

As illustrated in FIG. 3A, the other ends of single-stranded DNAs (probe ssDNAs) 1 (i.e., the opposite ends to the ends immobilized on a substrate 3) are provided with labels 2 (e.g., a fluorescent dye) so as to visualize an average state of the ssDNAs 1. The ssDNAs 1 are flexible (bendable and contractible) and thus, even when the distance between the points at which one ssDNA and another ssDNA adjacent to the one ssDNA are immobilized on the substrate is shorter than the total length of the one ssDNA and the another ssDNA, steric hindrance is difficult to occur. Also, each of the ssDNAs repeatedly stretches and contracts in a solution as a result of thermal agitation. The labels (the other ends) take an average position at a height of Ds, which corresponds to half of the length of the ssDNA 1. In contrast, double-stranded DNAs (dsDNAs) 4, each being composed of the ssDNA 1 and the target DNA, are thought to be in the form of relatively stiff rod. Thus, as illustrated in FIG. 3B, steric hindrance occurs among double-stranded DNAs (dsDNAs) 4 adjacent to one another, preventing each label 2 from approaching the substrate 3. In this state, the average distance between the substrate 3 and the labels 2 (the other ends) is Dw, which is shorter than the length of each double-stranded DNA (dsDNA) 4.

FIG. 3C is a graph obtained by plotting the fluorescent intensity against the distance from the substrate 3, considering resonance energy transfer from the fluorescent dye (label 2) to the substrate 3. In FIG. 3C, Ds denotes an average distance between the substrate 3 and the labels 2 (the other ends) of the ssDNAs 1, which are before formation of double strands together with the target DNAs; and Dw denotes an average distance between the substrate 3 and the labels 2 (the other ends) of the dsDNAs 4, which are after formation of double strands together with the target DNAs. As is clear from FIG. 3C, the target DNAs can be detected on the basis of the difference in fluorescent intensity between FIs at Ds and FIw at Dw. Further, the fluorescent intensity is proportional to the cube of the distance from the substrate and thus, the detection is non-linear and hence highly sensitive.

As described above, the target-detecting device disclosed herein can detect a target nucleic acid in high accuracy and for a short time.

(Method for producing target-detecting device) The method for producing a target-detecting device includes at least a probe-arranging step; and, if necessary, may further include other steps.

<Probe-arranging step> The probe-arranging step is a step of arranging probes on a substrate in such a number that, when the probes form double strands together with target nucleic acids, steric hindrance occurs between one double strand and another double strand adjacent to the one double strand so as to distance labels from the substrate.

The number of the probes in which the steric hindrance occurs may be calculated by, for example, multiplying an area where the probes are to be arranged by a surface density at which steric hindrance occurs between one double strand and another double strand adjacent thereto so as to distance the labels from the substrate.

The probes are preferably coordinated with counter cations.

By coordinating the probes with the counter cations, anions of the probes are neutralized by the counter cations, suppressing the electrostatic repulsion among the probes. Thus, the density of probes can be controlled by suppressing the electrostatic repulsion among the probes using the counter cations in different concentrations.

The counter cation is not particularly limited and may be appropriately selected depending on the purpose. Examples thereof include $Na^+$ and $K^+$.

By changing the ion (salt) concentration of NaCl, the screening effect of negatively-charged single-stranded oligonucleotides was controlled. The structure of the oligonucleotide is known but the effective size thereof in an aqueous solution is not known. Thus, the thiol groups of the single-stranded oligonucleotides were reacted in advance with a gold electrode at a salt concentration of 3 mM, 500 mM or 1,000 mM, and the deposition density of the oligonucleotides on the gold electrode was measured.

FIG. 4 is a graph indicating the relationship between the deposition density of the single-stranded oligonucleotides and the ion concentration of an electrolytic solution. In FIG. 4, the open circles correspond to deposition densities measured when a single-stranded oligonucleotide (24 mer DNA-C6-SH) was used for the experiment.

As is clear from the obtained calculation curve, the salt concentration may be set to 50 mM in order to control the deposition density on the electrode surface to $3 \times 10^{12}$ molecules/$cm^2$ (desired deposition density). In FIG. 4, the black circle corresponds to an experimental value obtained by depositing oligonucleotides on the electrode surface at a salt concentration of 50 mM. The desired salt concentration can be easily calculated.

Also, the black squares correspond to deposition densities measured when a single-stranded oligonucleotide (12 mer DNA-C6-SH) was used for the experiment.

EXAMPLES

Hereinafter, the examples of the present invention will be specifically explained, but these examples shall not be construed as to limit the scope of the present invention.

(Example 1) <Production of target-detecting device> One ends of 48-base-long single-stranded probe DNAs (ss48DNAs, length $L_{48}$: 16 nm) (product of TSUKUBA OLIGO SERVICE CO., LTD.), each being complementary to a target DNA, were immobilized at a density of $4.5 \times 10^{11}$ (molecules/$cm^2$) on an insulative glass substrate (product of Shin-Etsu Chemical Co., Ltd.) on which 100 nm-thick Au thin film had been formed.

Specifically, the immobilization of the ss48DNAs was performed by immersing the conductive substrate in a mixture of the ss48DNAs and an electrolytic solution (pH 7.4, NaCl (salt)-containing 10 mM tris buffer). The density was controlled by adjusting the salt concentration of the electrolytic solution to 50 mM and adjusting the immersion time to 15 minutes. In order for steric hindrance to occur among the formed double strands, the density was controlled to $4.5 \times 10^{11}$ (molecules/$cm^2$) so that the interval between the points at which the ss48DNAs were immobilized on the conductive substrate was adjusted to 16 nm. Notably, as illustrated in FIG. 2C, steric hindrance occurs when the density is adjusted higher than $1.1 \times 10^{11}$ (molecules/$cm^2$).

In addition, the other ends of the ss48DNAs (i.e., the opposite ends to the ends immobilized on the conductive substrate) were provided with labels (trade name: Cy3 (trade mark), a cyanine fluorescent dye having an emission wavelength of 565 nm) so as to visualize an average state of the ss48DNAs.

<Detection of target> A mixture of target DNAs (100 pM) (product of TSUKUBA OLIGO SERVICE CO., LTD., length: 16 nm) and a buffer solution (pH 7.4, NaCl = 50 mM, tris buffer = 10 mM) was added to the thus-produced target-detecting device so that the ss48DNAs and the target DNAs were hybridized with one another to form double strands. Notably, the diameter of each double strand is estimated to be 2 nm.

After the formation of the double strands, the fluorescent intensity was measured with a fluorescence detector (trade name: Typhoon).

As illustrated in FIG. 5A, ss48DNAs 5 are flexible (bendable and contractible) and thus, even when the distance (16 nm) between the points at which one ss48DNA and another ss48DNA adjacent to the one ss48DNA are immobilized on a substrate 7 is shorter than the total length (32 nm) of the one ss48DNA and the another ss48DNA, steric hindrance is difficult to occur. Also, each of the ss48DNAs 5 repeatedly stretches and contracts in a solution as a result of thermal agitation. The other ends thereof (labels 6) take an average position at a height of 8 nm, which corresponds to half of the length $L_{48}$ (16 nm) of the ss48DNA 5. That is, the average distance between the labels and the substrate is 8 nm. In contrast, double-stranded DNAs (ds48DNAs) 8, each being composed of the ss48DNA 5 and the target DNA, are in the form of relatively stiff rod. Thus, as illustrated in FIG. 5B, steric hindrance occurs among the double-stranded DNAs (ds48DNAs) 8 adjacent to one another, preventing each label 6 from approaching the substrate 7. In this state, as illustrated in FIG. 5C, the average distance between the substrate 7 and the other ends (labels 6) of the double-stranded DNAs (ds48DNAs) 8 is 15 nm ($= (L_{48} + \sqrt{3}/2L_{48})/2 = (2 + \sqrt{3})L_{48}/4$).

FIG. 5D is a graph obtained by plotting the fluorescent intensity observed against the estimated distance from the substrate. The plots agree well with the theoretical values (dotted line), indicating that double strands can be remarkably distinguished from single strands on the basis of the difference in fluorescent intensity. In this Example, the target DNA is detected on the basis of the difference in fluorescent intensity before and after hybridization. In addition, by observing hybridization in real time, the state where double strands are being formed may be observed.

(Example 2) <Production of target-detecting device> One ends of 48-base-long single-stranded probe DNAs

(ss48DNAs, length $L_{48}$: 16 nm) (product of TSUKUBA OLIGO SERVICE CO., LTD.), each being complementary to a target DNA, were immobilized at a density of 1.5 x $10^{11}$ (molecules/$cm^2$) on an insulative glass substrate (product of Shin-Etsu Chemical Co., Ltd.) on which 100 nm-thick Au thin film had been formed.

Specifically, the immobilization of the ss48DNAs was performed by immersing the conductive substrate in a mixture of the ss48DNAs and an electrolytic solution (pH 7.4, NaCl (salt)-containing 10 mM tris buffer). The density was controlled by adjusting the salt concentration of the electrolytic solution to 50 mM and adjusting the immersion time to 5 minutes. In order for steric hindrance to occur among the formed double strands, the density was controlled to $1.5 \times 10^{11}$ (molecules/$cm^2$) so that the interval between the points at which the ss48DNAs were immobilized on the conductive substrate was adjusted to $16\sqrt{3}$ nm (= 27.7 nm).

In addition, the other ends of the ss48DNAs (i.e., the opposite ends to the ends immobilized on the conductive substrate) were provided with labels (trade name: Cy3 (trade mark), a cyanine fluorescent dye having an emission wavelength of 565 nm) so as to visualize an average state of the ss48DNAs.

<Detection of target> A mixture of target DNAs (100 pM) (product of TSUKUBA OLIGO SERVICE CO., LTD., length: 16 nm) and a buffer solution (pH 7.4, NaCl = 50 mM, tris buffer = 10 mM) was added to the thus-produced target-detecting device so that the ss48DNAs and target DNAs were hybridized with one another to form double strands. Notably, the diameter of each double strand is estimated to be 2 nm.

After the formation of the double strands, the fluorescent intensity was measured with a fluorescence detector (trade name: Typhoon).

As illustrated in FIG. 6A, ss48DNAs 5 are flexible (bendable and contractible) and thus, even when the distance (27.7 nm) between the points at which one ss48DNA and another ss48DNA adjacent to the one ss48DNA are immobilized on a substrate 7 is shorter than the total length (32 nm) of the one ss48DNA and the another ss48DNA, steric hindrance is difficult to occur. Also, each of the ss48DNAs 5 repeatedly stretches and contracts in a solution as a result of thermal agitation. The other ends thereof (labels 6) take an average position at a height of 8 nm, which corresponds to half of the length $L_{48}$ (16 nm) of the ss48DNA 5. That is, the average distance between the labels and the substrate 7 is 8 nm. In contrast, double-stranded DNAs (ds48DNAs) 8, each being composed of the ss48DNA 5 and the target DNA, are in the form of relatively stiff rod. Thus, as illustrated in FIG. 6B, steric hindrance occurs among the double-stranded DNAs (ds48DNAs) 8 adjacent to one another, preventing each label 6 from approaching the substrate 7. In this state, as illustrated in FIG. 6C, the average distance between the substrate 7 and the other ends (labels 6) of the double-stranded DNAs (ds48DNAs) is 12 nm (= $(L_{48} + 1/2L_{48})/2 = (3/4)L_{48}$).

FIG. 6D is a graph obtained by plotting the fluorescent intensity observed against the estimated distance from the substrate. The plots are in well agreement with the theoretical values (dotted line), indicating that double strands can be remarkably distinguished from single strands on the basis of the difference in fluorescent intensity. In this Example, the target DNA is detected on the basis of the difference in fluorescent intensity before and after hybridization. In addition, by observing hybridization in real time, the state where double strands are being formed may be observed.

(Comparative Example 1) <Production of target-detecting device> One ends of 48-base-long single-stranded probe DNAs (ss48DNAs, length $L_{48}$: 16 nm) (product of TSUKUBA OLIGO SERVICE CO., LTD.), each being complementary to a target DNA, were immobilized at a density of $9.4 \times 10^{10}$ (molecules/$cm^2$) on an insulative glass substrate (product of Shin-Etsu Chemical Co., Ltd.) on which 100 nm-thick Au thin film had been formed.

Specifically, the immobilization of the ss48DNAs was performed by immersing the conductive substrate in a mixture of the ss48DNAs and an electrolytic solution (pH 7.4, NaCl (salt)-containing 10 mM tris buffer). The density was controlled by adjusting the salt concentration of the electrolytic solution to 10 mM and adjusting the immersion time to 15 minutes. In order for steric hindrance not to occur among the formed double strands, the density was controlled to 9.4 x $10^{10}$ (molecules/$cm^2$) so that the interval between the points at which the ss48DNAs were immobilized on the conductive substrate was adjusted to 35 nm.

In addition, the other ends of the ss48DNAs (i.e., the opposite ends to the ends immobilized on the conductive substrate) were provided with labels (trade name: Cy3 (trade mark), a cyanine fluorescent dye having an emission wavelength of 565 nm) so as to visualize an average state of the ss48DNAs.

<Detection of target> A mixture of target DNAs (100 pM) (product of TSUKUBA OLIGO SERVICE CO., LTD., length: 16 nm) and a buffer solution (pH 7.4, NaCl = 50 mM, tris buffer = 10 mM) was added to the thus-produced target-detecting device so that the ss48DNAs and the target DNAs were hybridized with one another to form double strands. Notably, the diameter of each double strand is estimated to be 2 nm.

After the formation of the double strands, the fluorescent intensity was measured with a fluorescence detector (trade name: Typhoon).

As illustrated in FIG. 7A, ss48DNAs 5 are flexible (bendable and contractible) and the distance (35 nm) between the points at which one ss48DNA and another ss48DNA adjacent to the one ss48DNA are immobilized on a substrate 7 is greater than the total length (32 nm) of the one ss48DNA and the another ss48DNA, and thus, steric hindrance does not occur. Also, each of the ss48DNAs 5 repeatedly stretches and contracts in a solution as a result of thermal agitation. The other ends thereof (labels 6) take an average position at a height of 8 nm, which corresponds to half of the length

$L_{48}$ (16 nm) of the ss48DNA 5. That is, the average distance between the labels and the substrate 7 is 8 nm. Meanwhile, although double-stranded DNAs (ds48DNAs) 8, each being composed of the ss48DNA 5 and the target DNA, are in the form of relatively stiff rod, steric hindrance does not occur among the double-stranded DNAs (ds48DNAs) 8 adjacent to one another as illustrated in FIG. 7B, since the distance (35 nm) between the points at which one ss48DNA and another ss48DNA adjacent to the one ss48DNA are immobilized on a substrate 7 is greater than the total length (32 nm) of the one ss48DNA and the another ss48DNA. In this state, the average distance between the substrate 7 and the top end of each DNA is 8 nm, which is the same as the case of the ss48DNA 5.

As a result, as illustrated in FIG. 7C, double strands could not be distinguished from single strands on the basis of the difference in fluorescent intensity.

(Comparative Example 2) <Production of target-detecting device> One ends of 48-base-long single-stranded probe DNAs (ss48DNAs, length $L_{48}$: 16 nm) (product of TSUKUBA OLIGO SERVICE CO., LTD.), each being complementary to a target DNA, were immobilized at a density of $7.2 \times 10^{12}$ (molecules/$cm^2$) on an insulative glass substrate (product of Shin-Etsu Chemical Co., Ltd.) on which 100 nm-thick Au thin film had been formed.

Specifically, the immobilization of the ss48DNAs was performed by immersing the conductive substrate in a mixture of the ss48DNAs and an electrolytic solution (pH 7.4, NaCl (salt)-containing 10 mM tris buffer). The density was controlled by adjusting the salt concentration of the electrolytic solution to 500 mM and adjusting the immersion time to 30 minutes. In order for sufficient steric hindrance to occur among the immobilized single strands, the density was controlled to $7.2 \times 10^{12}$ (molecules/$cm^2$) so that the interval between the points at which ss48DNAs were immobilized on the conductive substrate was adjusted to 4 nm.

In addition, the other ends of the ss48DNAs (i.e., the opposite ends to the ends immobilized on the conductive substrate) were provided with labels (trade name: Cy3 (trade mark), a cyanine fluorescent dye having an emission wavelength of 565 nm) so as to visualize an average state of the ss48DNAs.

<Detection of target> A mixture of target DNAs (100 pM) (product of TSUKUBA OLIGO SERVICE CO., LTD., length: 16 nm) and a buffer solution (pH 7.4, NaCl = 50 mM, tris buffer = 10 mM) was added to the thus-produced target-detecting device so that the ss48DNAs and the target DNAs were hybridized with one another to form double strands. Notably, the diameter of each double strand is estimated to be 2 nm.

After the formation of the double strands, the fluorescent intensity was measured with a fluorescence detector (trade neme: Typhoon).

As illustrated in FIG. 8A, ss48DNAs 5 are flexible (bendable and contractible), but steric hindrance occurs when the distance between the DNAs adjacent to one another is very short. As a result, each ss48DNA is maintained in a stretching state, and the other ends thereof (label 6) take an average position at a height of 16 nm (= $L_{48}$ (the length of the ss48DNA 5)). That is, the average distance between the labels and the substrate 7 is 16 nm. Similarly, double-stranded DNAs (ds48DNAs) 8, each being composed of the ss48DNA and the target DNA, become upright due to steric hindrance. In this state, as illustrated in FIG. 8B, the average distance between the substrate and the other ends of the double-stranded DNAs (ds48DNAs) 8 is 16 nm (= $L_{48}$), which is the same as the case of the ss48DNAs 5.

As a result, as illustrated in FIG. 8C, double strands could not be distinguished from single strands on the basis of the difference in fluorescent intensity.

As is clear from the results of Examples 1 and 2 and Comparative Examples 1 and 2, the surface density is preferably controlled so that the angle between the substrate 7 and each double-stranded DNA 8 is adjusted to 30° to 60°.

## Claims

**1.** A target-detecting device comprising:

a substrate (3), and
a plurality of probes (1), one end of said probes (1) being immobilized on the substrate (3),
wherein the probes (1) each comprise, in parts thereof, a label (2) which functions when distanced from the substrate (3) and are capable of forming double strands (4) together with target nucleic acids;
wherein the probes (1) are arranged at such positions that, when the probes (1) form double strands (4) together with the target nucleic acids, steric hindrance occurs between one double strand (4) and another double strand (4) adjacent to the one double strand (4) so as to distance the label (2) from the substrate (3); and
**characterized in that** the interval between points at which one probe (1) of the probes and another probe (1) adjacent to the one probe (1) are immobilized on the substrate (3) is equal to or greater than the diameter of the double strand (4) and is smaller than the total length of the one probe (1) and the another probe (1).

**2.** The target-detecting device according to claim 1, wherein, assuming that circles having the same radius shorter than the length of each probe (1) are arranged on the substrate (3) so that hexagons each being formed by connecting

together the centers of six circles in contact with one circle are regular hexagons which are tessellated on the substrate (3), points at which the probes (1) are immobilized on the substrate (3) are located at the centers of the circles.

3. The target-detecting device according to any of claims 1 to 2, wherein the surface density of points at which the probes (1) are immobilized on the substrate (3) satisfies the following expression (1):

$$\text{Surface density} > \sqrt{3}/(6X^2) \cdots \text{Expression (1)}$$

where X represents an average length of the probes.

4. The target-detecting device according to any of claims 1 to 3, wherein the label (2) is a fluorescent dye and the substrate (3) is a conductive substrate.

5. The target-detecting device according to any of claims 1 to 3, wherein the label (2) is an oxidation-reduction marker and the substrate (3) is a conductive substrate.

6. The target-detecting device according to any of claims 1 to 5, wherein each of the probes (1) comprises a sulfur atom in part of the molecule thereof, and can be bound to the substrate (3) via the sulfur atom.

7. A method for producing the target-detecting device according to any of claims 1 to 6, the method comprising:

arranging probes (1) on a substrate (3) in such a number that, when the probes (1) form double strands (4) together with target nucleic acids, steric hindrance occurs between one double strand (4) and another double strand (4) adjacent to the one double strand (4) so as to distance labels (2) from the substrate (3);
**characterized in that** the interval between points at which one probe (1) of the probes and another probe (1) adjacent to the one probe (1) are immobilized on the substrate (3) is equal to or greater than the diameter of the double strand (4) and is smaller than the total length of the one probe (1) and the another probe (1).

8. The method according to claim 7, wherein the probes are coordinated with counter cations.

9. The method according to claim 8, wherein the counter cation is at least one of $Na^+$ and $K^+$.

**Patentansprüche**

1. Zieldetektionsvorrichtung, umfassend:

ein Substrat (3) und
eine Vielzahl von Proben (1), wobei ein Ende der Proben (1) auf dem Substrat (3) unbeweglich ist,
bei der die Proben (1) jeweils, in Teilen derselben, eine Markierung (2) umfassen, die funktioniert, wenn sie von dem Substrat (3) beabstandet ist, und zusammen mit Zielnukleinsäuren zum Bilden von Doppelsträngen (4) in der Lage sind;
bei der die Proben (1) an solchen Positionen angeordnet sind, dass dann, wenn die Proben (1) zusammen mit den Zielnukleinsäuren Doppelstränge (4) bilden, zwischen einem Doppelstrang (4) und einem anderen Doppelstrang (4), der mit dem einen Doppelstrang (4) benachbart ist, eine sterische Hinderung auftritt, um so die Markierung (2) von dem Substrat (3) zu beabstanden; und
**dadurch gekennzeichnet, dass** das Intervall zwischen Punkten, an denen eine Probe (1) von den Proben und eine andere Probe (1), die mit der einen Probe (1) benachbart ist, auf dem Substrat (3) unbeweglich ist, größer gleich dem Durchmesser des Doppelstrangs (4) ist und kleiner als die Gesamtlänge der einen Probe (1) und der anderen Probe (1) ist.

2. Zieldetektionsvorrichtung nach Anspruch 1, bei dem unter der Annahme, dass Kreise, die denselben Radius haben, der kürzer als die Länge jeder Probe (1) ist, auf dem Substrat (3) so angeordnet sind, dass Sechsecke, die jeweils durch Verbinden der Mitten von sechs Kreisen gebildet werden, die mit einem Kreis in Kontakt sind, regelmäßige Sechsecke sind, die auf dem Substrat (3) mosaikartig positioniert sind, Punkte, an denen die Proben (1) auf dem

Substrat (3) unbeweglich sind, in den Mitten der Kreise liegen.

**3.** Zieldetektionsvorrichtung nach einem der Ansprüche 1 bis 2, bei der die Oberflächendichte von Punkten, an denen die Proben (1) auf dem Substrat (3) unbeweglich sind, den folgenden Ausdruck (1) erfüllt:

$$\text{Oberflächendichte} > \sqrt{3}/(6X^2) \qquad \text{... Ausdruck (1)}$$

wobei X eine durchschnittliche Länge der Proben darstellt.

**4.** Zieldetektionsvorrichtung nach einem der Ansprüche 1 bis 3, bei der die Markierung (2) ein Fluoreszenzfarbstoff ist und das Substrat (3) ein leitfähiges Substrat ist.

**5.** Zieldetektionsvorrichtung nach einem der Ansprüche 1 bis 3, bei der die Markierung (2) ein Oxidoreduktionsmarker ist und das Substrat (3) ein leitfähiges Substrat ist.

**6.** Zieldetektionsvorrichtung nach einem der Ansprüche 1 bis 5, bei dem jede der Proben (1) ein Schwefelatom in einem Teil des Moleküls derselben umfasst und über das Schwefelatom an das Substrat (3) gebunden werden kann.

**7.** Verfahren zum Herstellen der Zieldetektionsvorrichtung nach einem der Ansprüche 1 bis 6, welches Verfahren umfasst:

Anordnen von Proben (1) auf einem Substrat (3) in solch einer Anzahl, dass dann, wenn die Proben (1) zusammen mit Zielnukleinsäuren Doppelstränge (4) bilden, eine sterische Hinderung zwischen einem Doppelstrang (4) und einen anderen Doppelstrang (4) auftritt, der mit dem einen Doppelstrang (4) benachbart ist, um Markierungen (2) von dem Substrat (3) zu beabstanden;
**dadurch gekennzeichnet, dass** das Intervall zwischen Punkten, an denen eine Probe (1) von den Proben und eine andere Probe (1), die mit der einen Probe (1) benachbart ist, auf dem Substrat (3) unbeweglich ist, größer gleich dem Durchmesser des Doppelstrangs (4) ist und kleiner als die Gesamtlänge der einen Probe (1) und der anderen Probe (1) ist.

**8.** Verfahren nach Anspruch 7, bei dem Gegenkationen koordinativ an die Proben gebunden sind.

**9.** Verfahren nach Anspruch 8, bei dem das Gegenkation wenigstens eines von $Na^+$ und $K^+$ ist.

## Revendications

**1.** Dispositif de détection de cible comprenant :

un substrat (3), et
une pluralité de sondes (1), une extrémité desdites sondes (1) étant immobilisée sur le substrat (3),
dans lequel les sondes (1) comprennent chacune, dans des parties de celles-ci, un marqueur (2) qui est actif lorsqu'il est éloigné du substrat (3) et sont capables de former des doubles brins (4) conjointement avec des acides nucléiques cibles ;
dans lequel les sondes (1) sont agencées à des positions telles que, lorsque les sondes (1) forment des doubles brins (4) conjointement avec les acides nucléiques cibles, un encombrement stérique se produit entre un double brin (4) et un autre double brin (4) adjacent au premier double brin (4) de manière à éloigner le marqueur (2) du substrat (3) ; et
**caractérisé en ce que** l'intervalle entre des points auxquels une sonde (1) parmi les sondes et une autre sonde (1) adjacente à la première sonde (1) sont immobilisées sur le substrat (3) est égal ou supérieur au diamètre du double brin (4) et est plus petit que la longueur totale de la première sonde (1) et l'autre sonde (1).

**2.** Dispositif de détection de cible selon la revendication 1, dans lequel, en supposant que des cercles ayant le même rayon plus court que la longueur de chaque sonde (1) sont agencés sur le substrat (3) de sorte que des hexagones, chacun étant formé en reliant conjointement les centres de six cercles en contact avec un cercle, sont des hexagones réguliers qui sont tesselés sur le substrat (3), les points auxquels les sondes (1) sont immobilisées sur le substrat

(3) étant situés aux centres des cercles.

3. Dispositif de détection de cible selon l'une quelconque des revendications 1 à 2, dans lequel la densité de surface de points auxquels les sondes (1) sont immobilisées sur le substrat (3) satisfait à l'équation suivante (1) :

$$\text{Densité de surface} > \sqrt{3}/(6X^2) \quad \text{Équation (1)}$$

où X représente la longueur moyenne des sondes.

4. Dispositif de détection de cible selon l'une quelconque des revendications 1 à 3, dans lequel le marqueur (2) est un colorant fluorescent et le substrat (3) est un substrat conducteur.

5. Dispositif de détection de cible selon l'une quelconque des revendications 1 à 3, dans lequel le marqueur (2) est un marqueur d'oxydo-réduction et le substrat (3) est un substrat conducteur.

6. Dispositif de détection de cible selon l'une quelconque des revendications 1 à 5, dans lequel chacune des sondes (1) comprend un atome de soufre dans une partie de la molécule de celle-ci, et peut être liée au substrat (3) via l'atome de soufre.

7. Procédé pour produire le dispositif de détection de cible selon l'une quelconque des revendications 1 à 6, le procédé comprenant :

l'agencement de sondes (1) sur un substrat (3) en un nombre tel que, lorsque les sondes (1) forment des doubles brins (4) avec des acides nucléiques cibles, un encombrement stérique se produit entre un double brin (4) et un autre double brin (4) adjacent au premier double brin (4) de manière à éloigner les marqueurs (2) du substrat (3) ;
**caractérisé en ce que** l'intervalle entre les points auxquels une sonde (1) parmi les sondes et une autre sonde (1) adjacente à la première sonde (1) sont immobilisées sur le substrat (3) est égal ou supérieur au diamètre du double brin (4) et est plus petit que la longueur totale de la première sonde (1) et l'autre sonde (1).

8. Procédé selon la revendication 7, dans lequel les sondes sont coordonnées avec des contre-cations.

9. Procédé selon la revendication 8, dans lequel le contre-cation est au moins l'un de $Na^+$ et $K^+$.

FIG. 1A

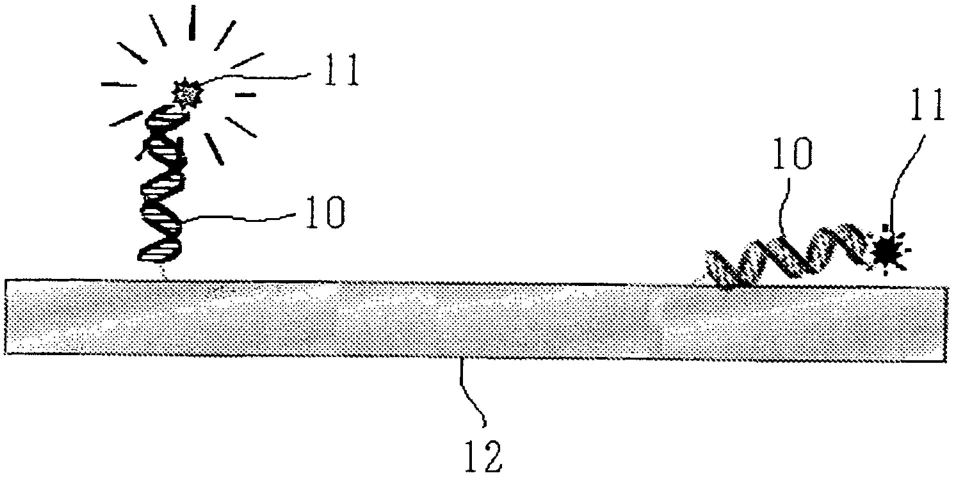


FIG. 1B

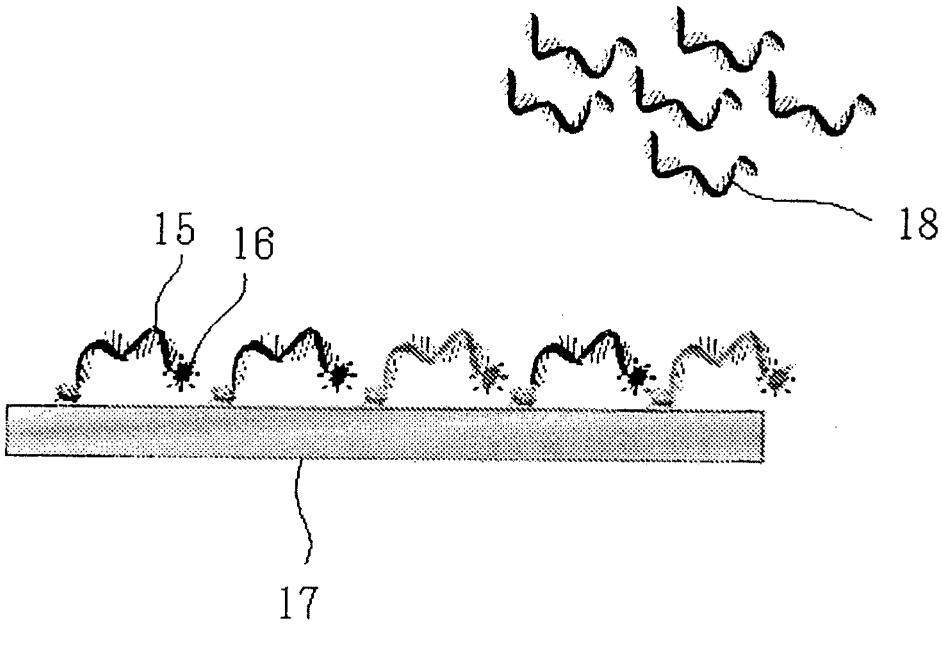

FIG. 1C

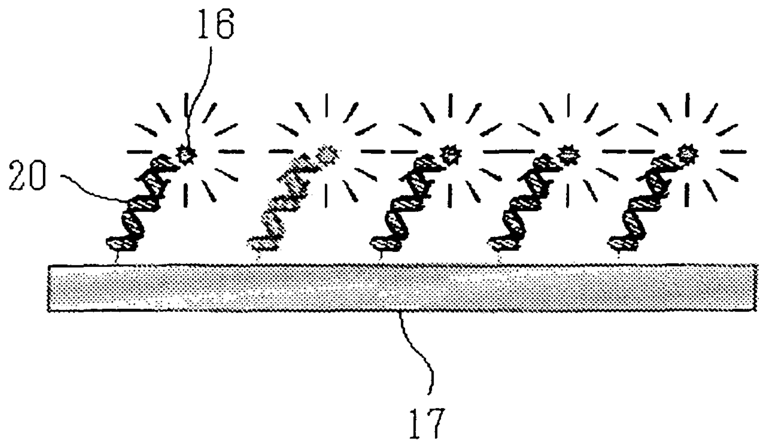


FIG. 1D

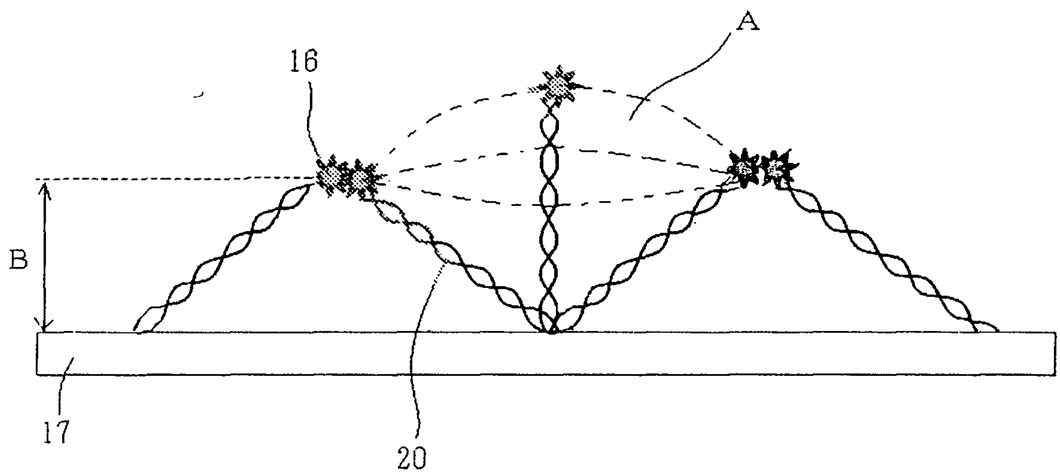

FIG. 2A

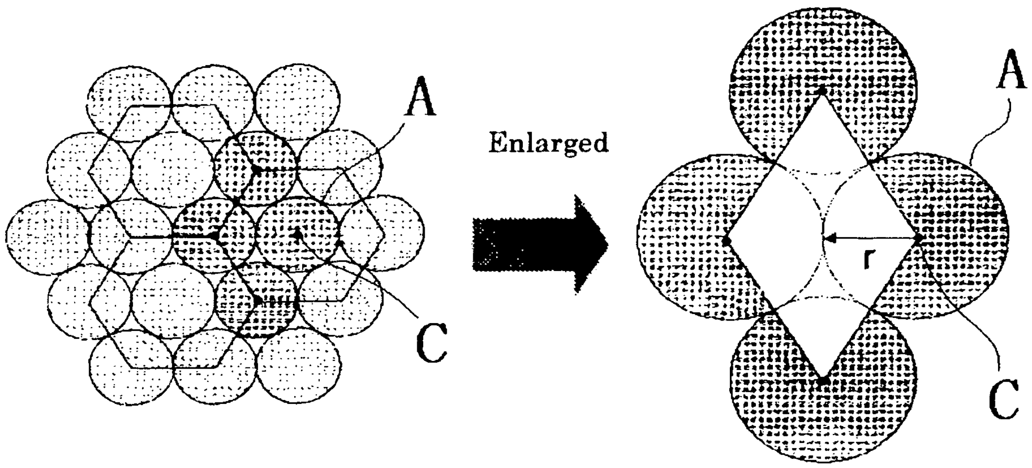


FIG. 2B

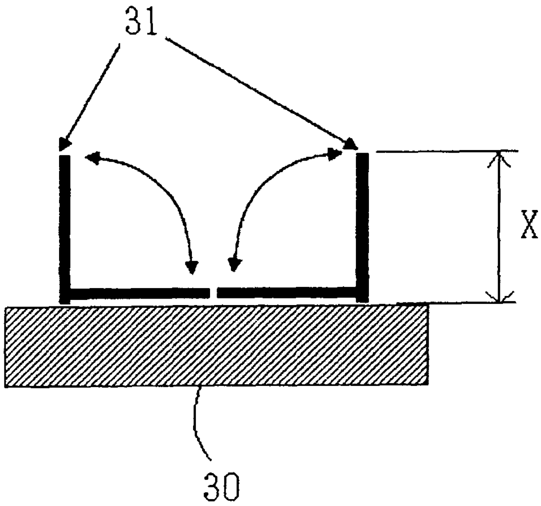

FIG. 2C

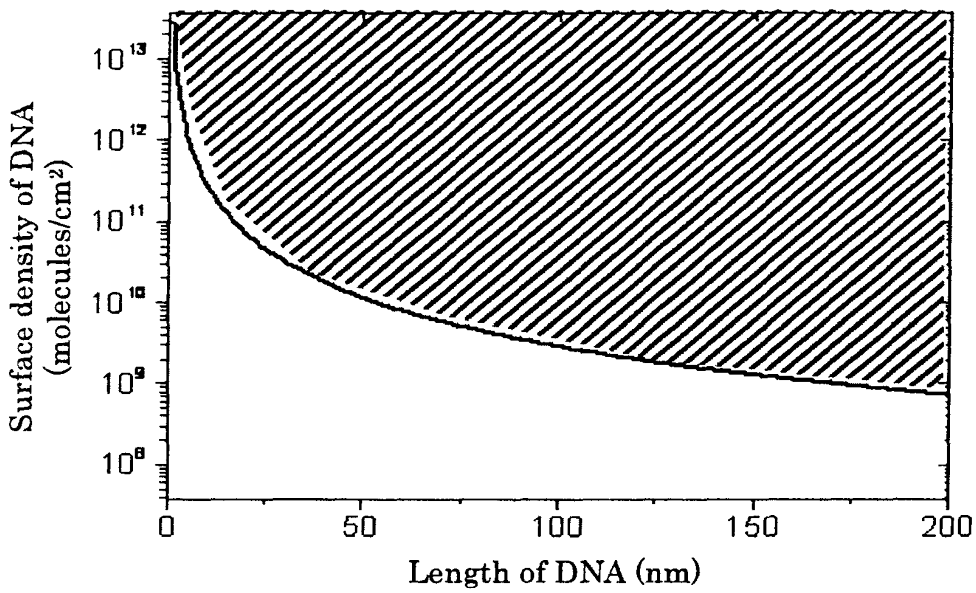
Surface density of DNA (molecules/cm²)
10¹³
10¹²
10¹¹
10¹⁰
10⁹
10⁸
0
50
100
150
200
Length of DNA (nm)

FIG. 3A

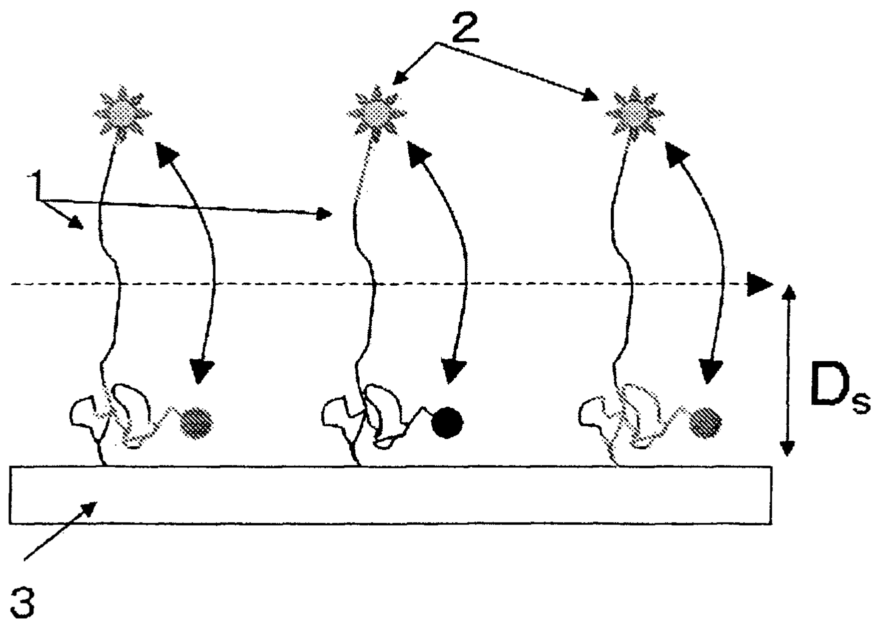
2
1
Ds
3

FIG. 3B

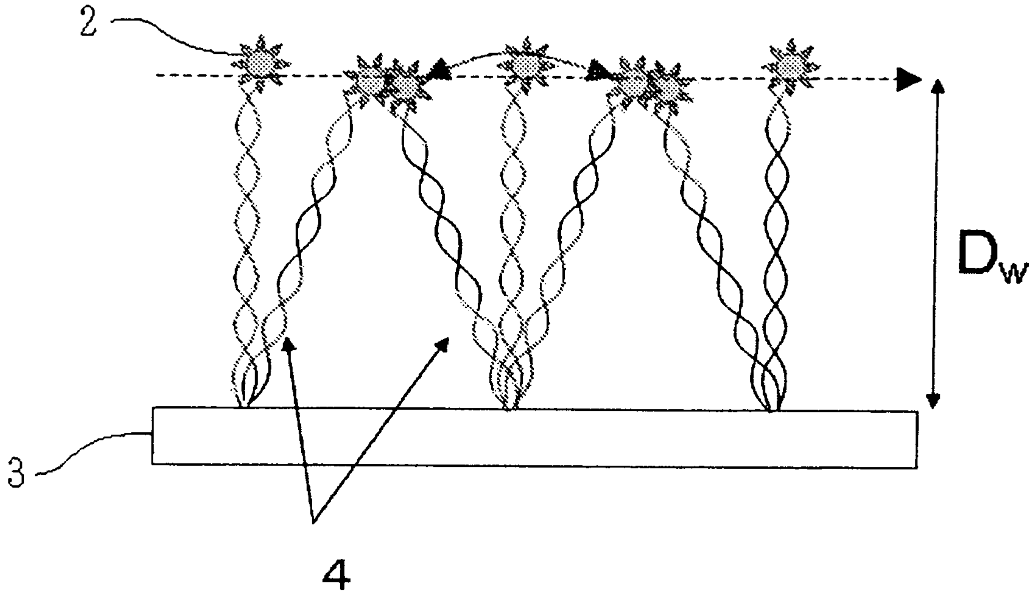
2
3
4
$D_W$

FIG. 3C

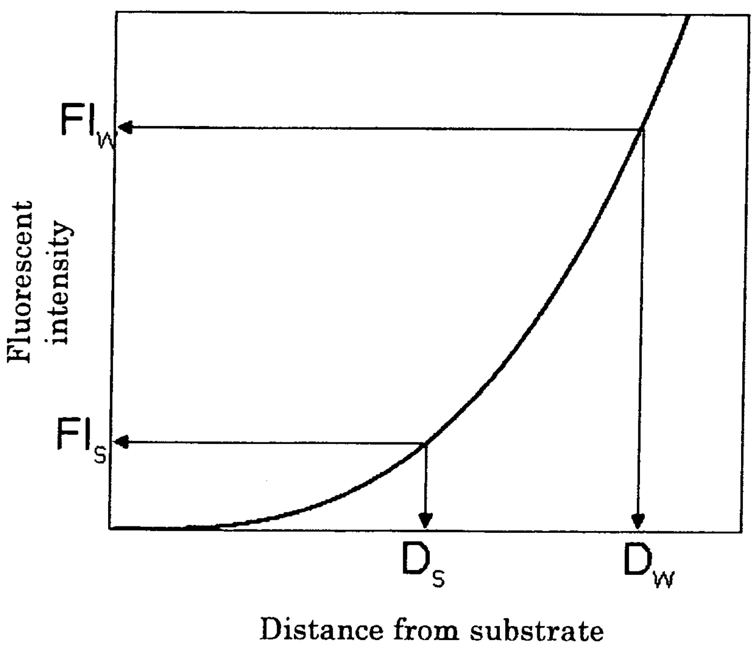
$FI_W$
$FI_S$
Fluorescent intensity
$D_S$
$D_W$
Distance from substrate

FIG. 4

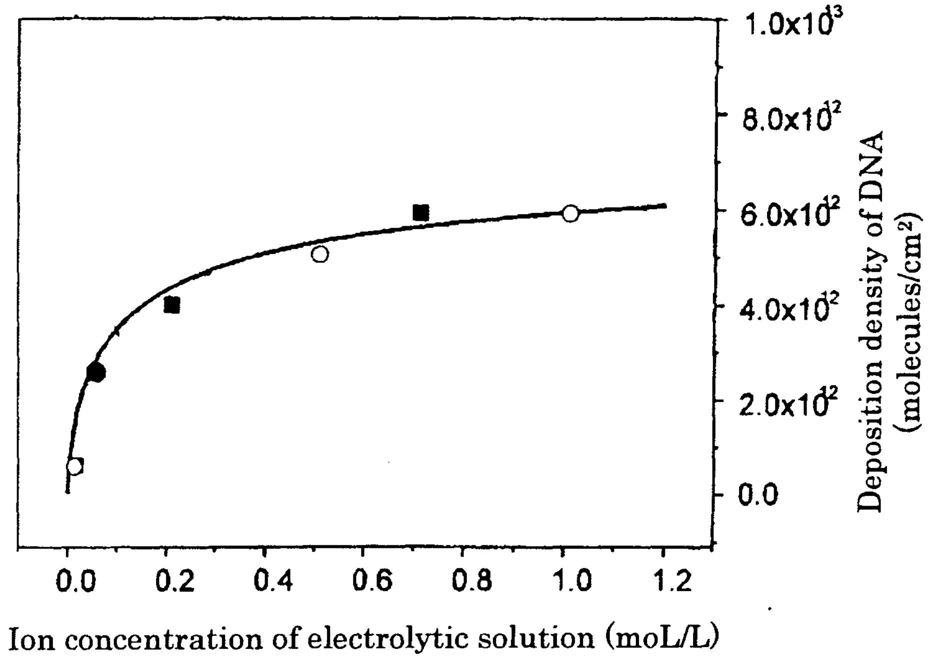
1.0x10^13
8.0x10^12
6.0x10^12
4.0x10^12
2.0x10^12
0.0
Deposition density of DNA (molecules/cm²)
0.0 0.2 0.4 0.6 0.8 1.0 1.2
Ion concentration of electrolytic solution (moL/L)

FIG. 5A

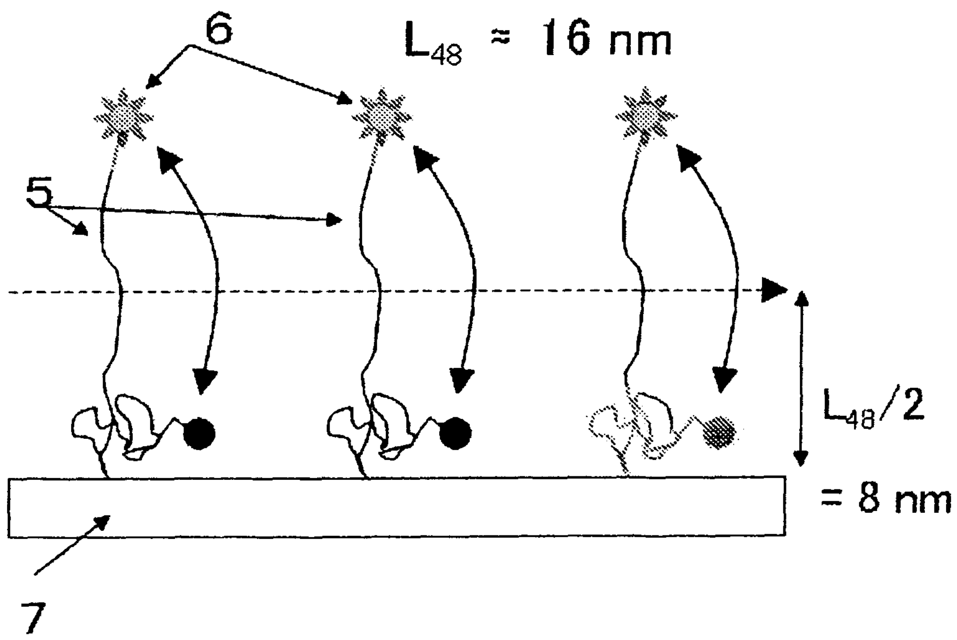
6
L48 ≈ 16 nm
5
L48/2
= 8 nm
7

FIG. 5B

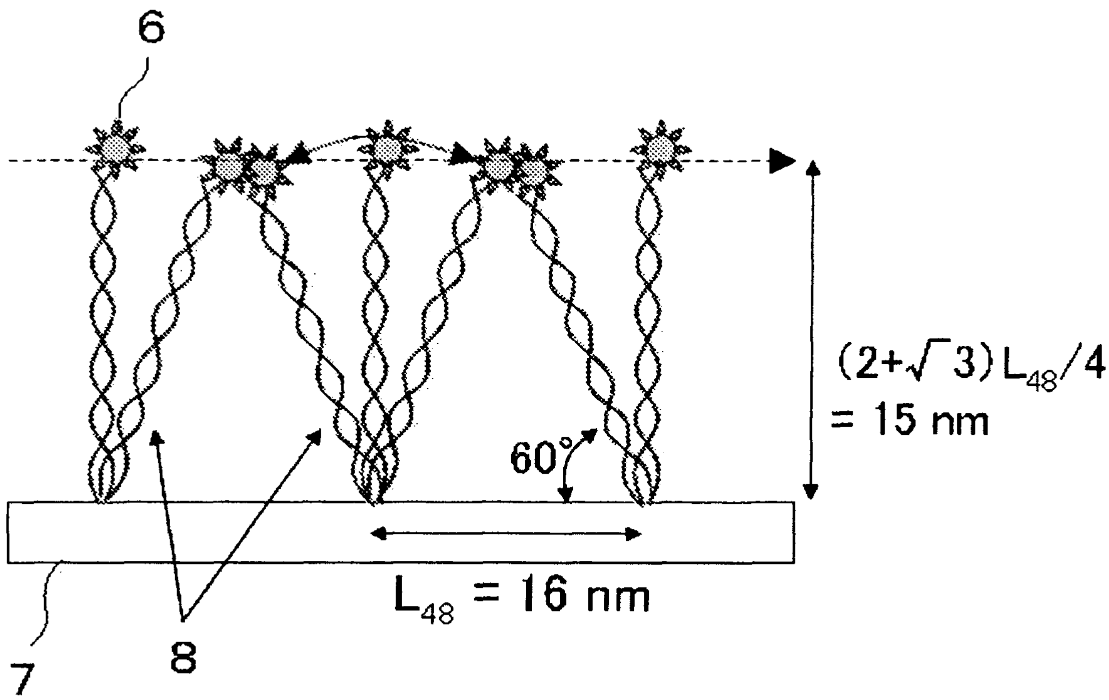


FIG. 5C

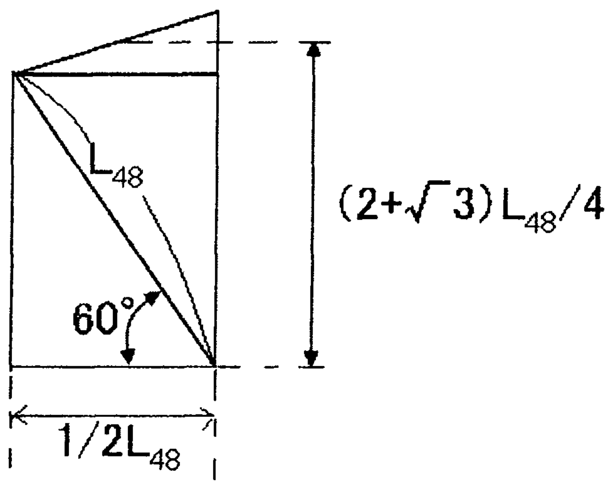

FIG. 5D

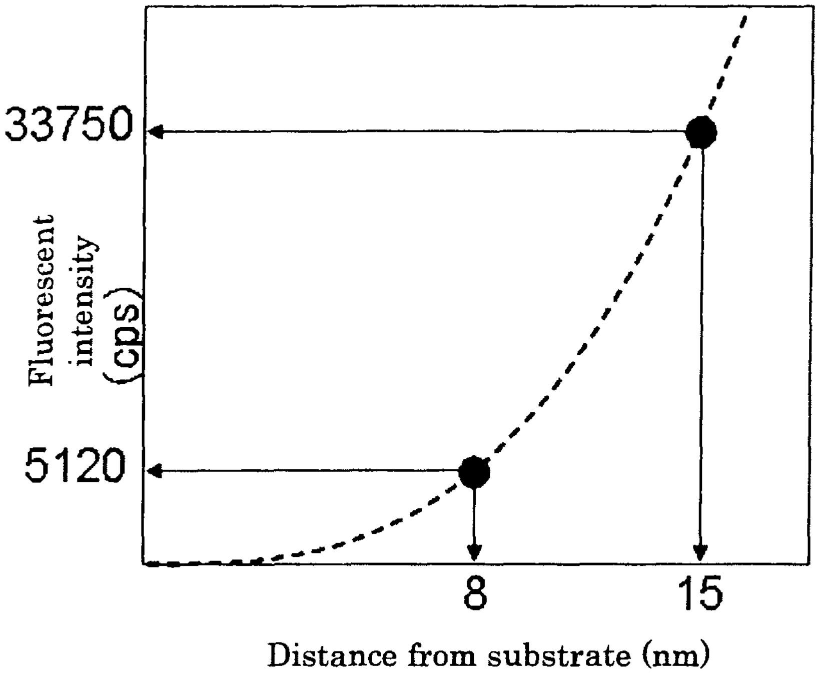
33750
5120
Fluorescent intensity (cps)
8
15
Distance from substrate (nm)

FIG. 6A

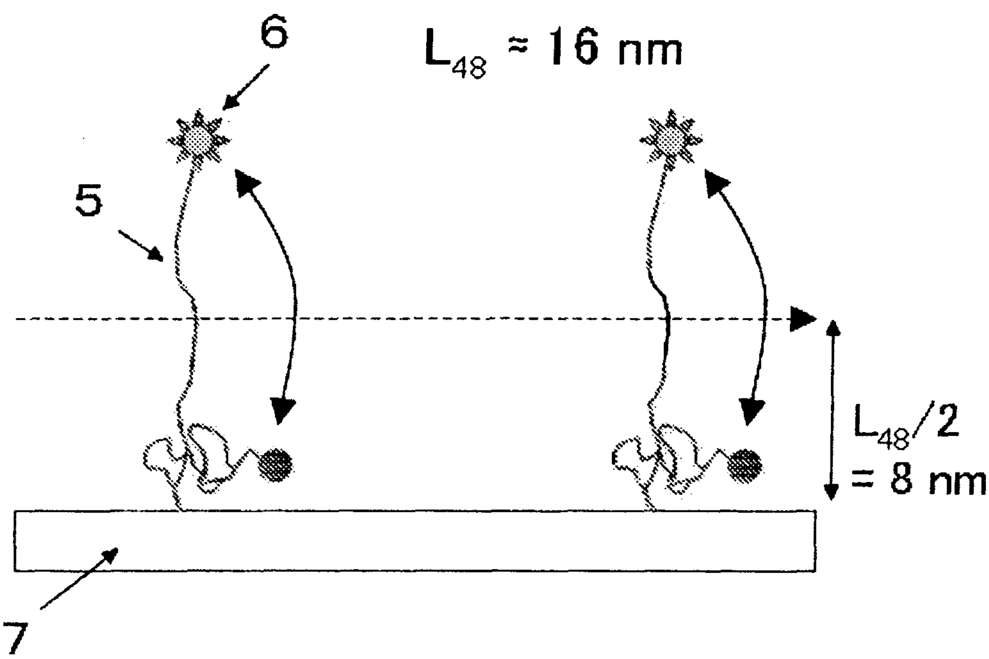
6
$L_{48}$ ≈ 16 nm
5
$L_{48}/2$ = 8 nm
7

FIG. 6B

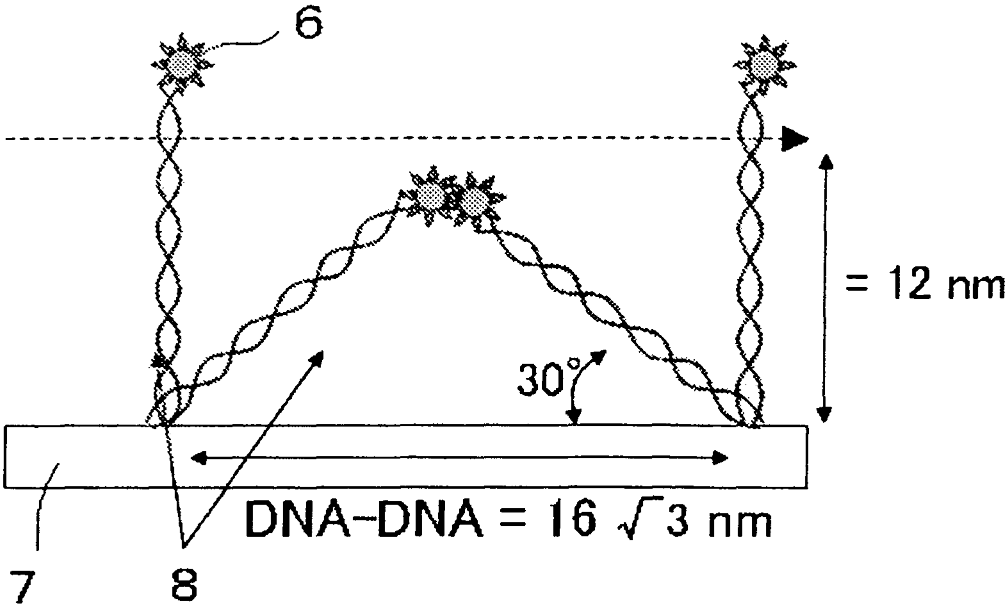


FIG. 6C

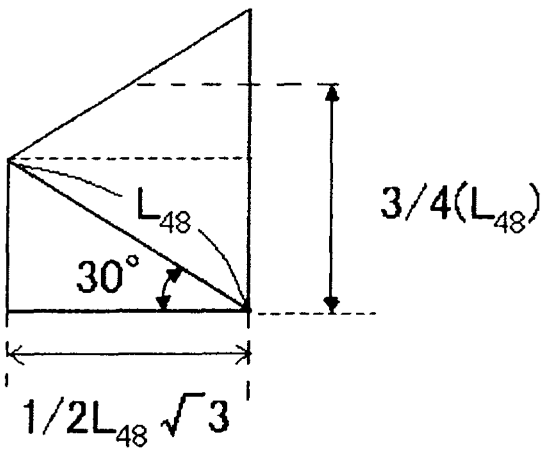

FIG. 6D

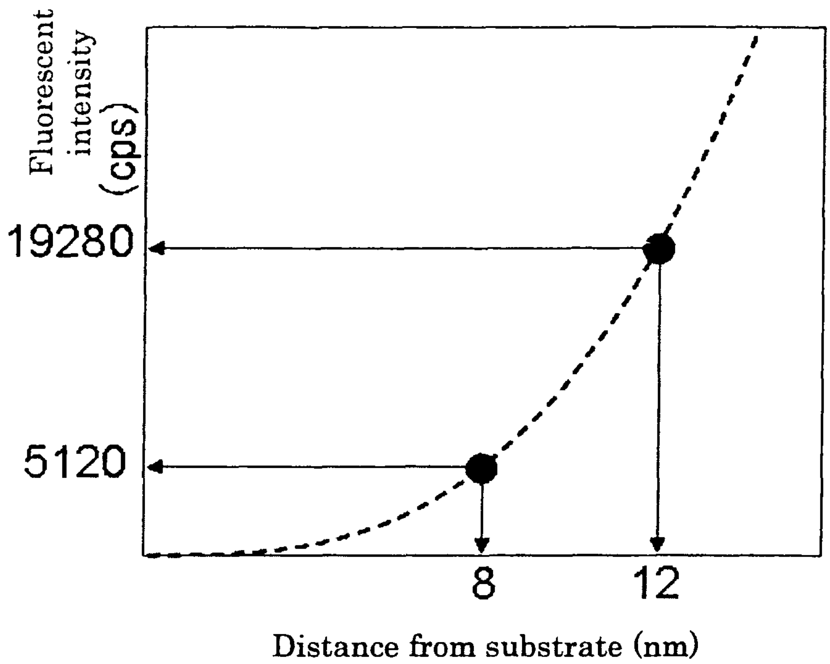
Fluorescent intensity (cps)
19280
5120
8
12
Distance from substrate (nm)

FIG. 7A

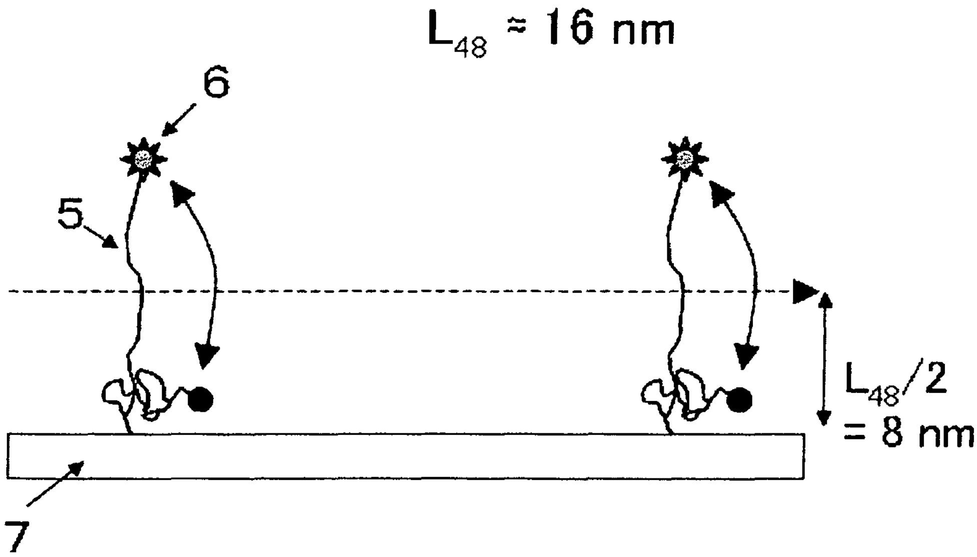
$L_{48} \approx 16$ nm
6
5
$L_{48}/2$
= 8 nm
7

FIG. 7B

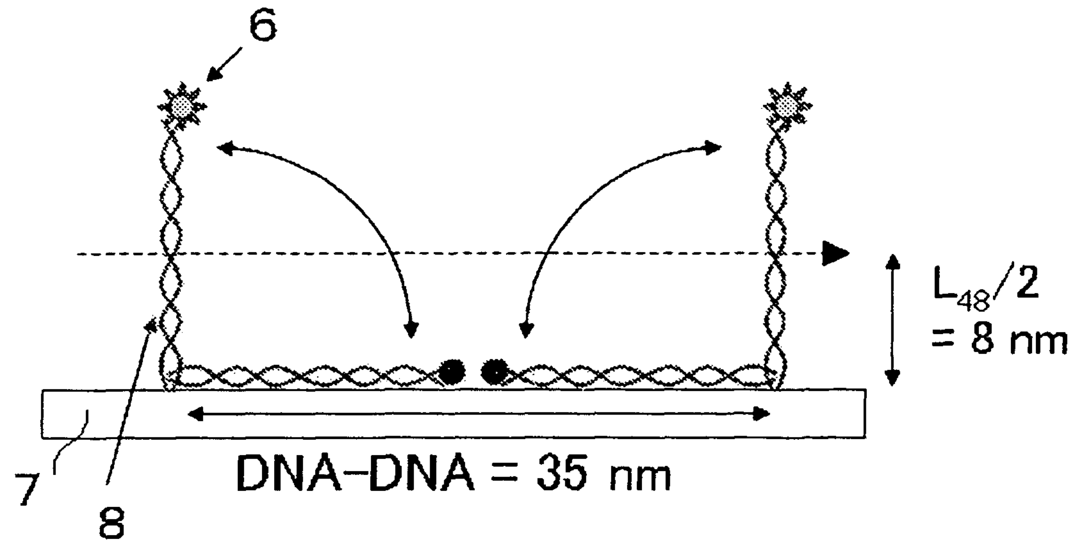
6
$L_{48}/2$
= 8 nm
7
8
DNA–DNA = 35 nm

FIG. 7C

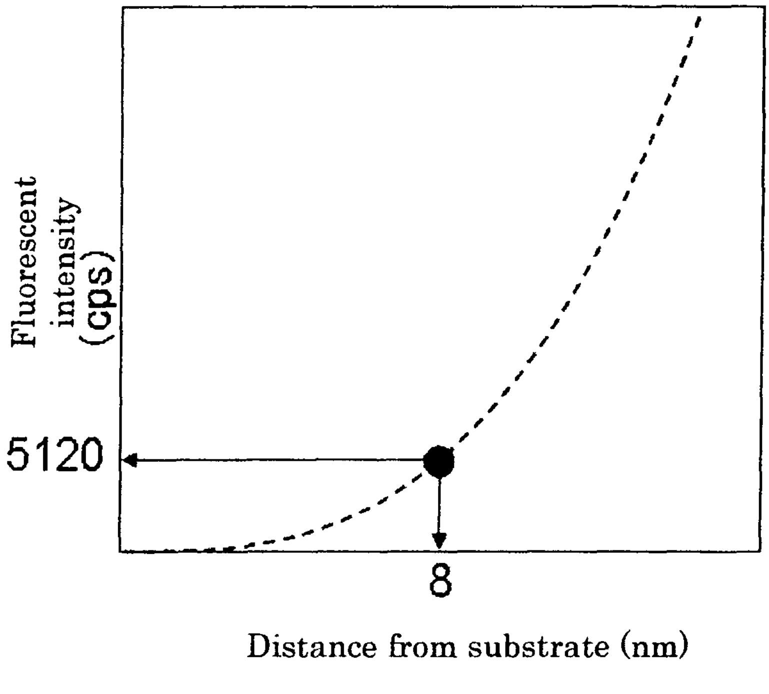
Fluorescent intensity (cps)
5120
8
Distance from substrate (nm)

FIG. 8A

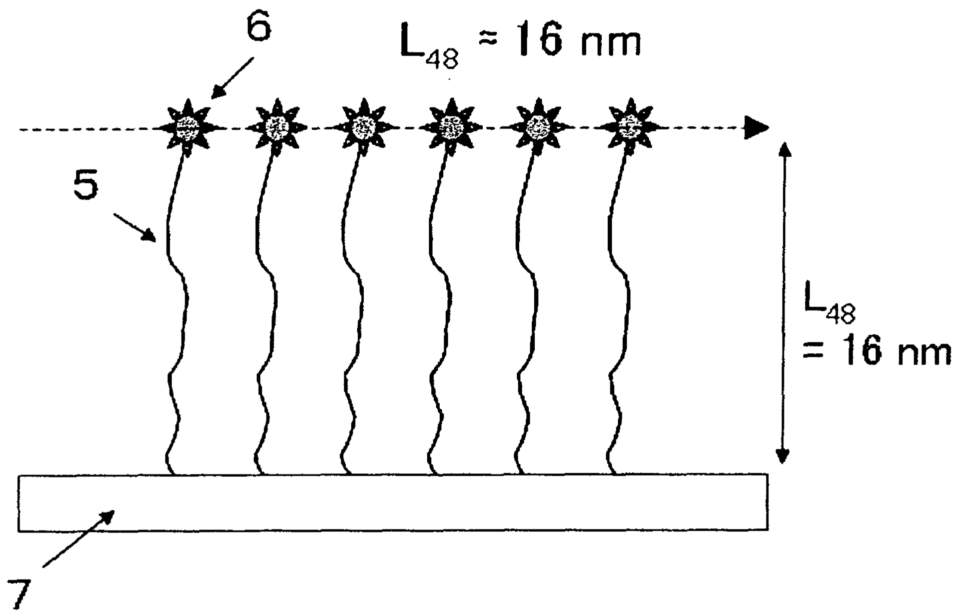


FIG. 8B

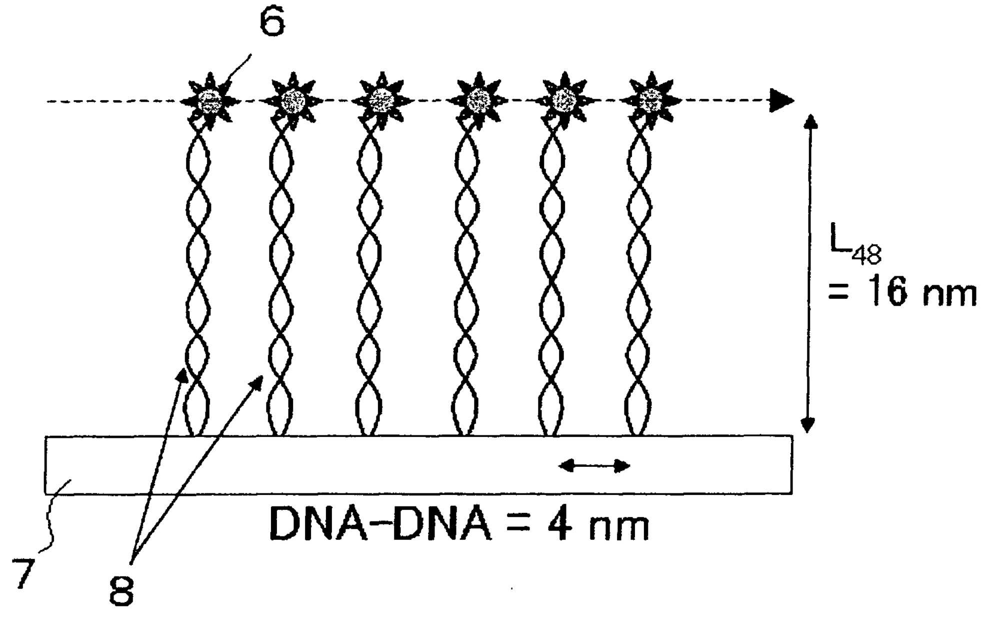

FIG. 8C

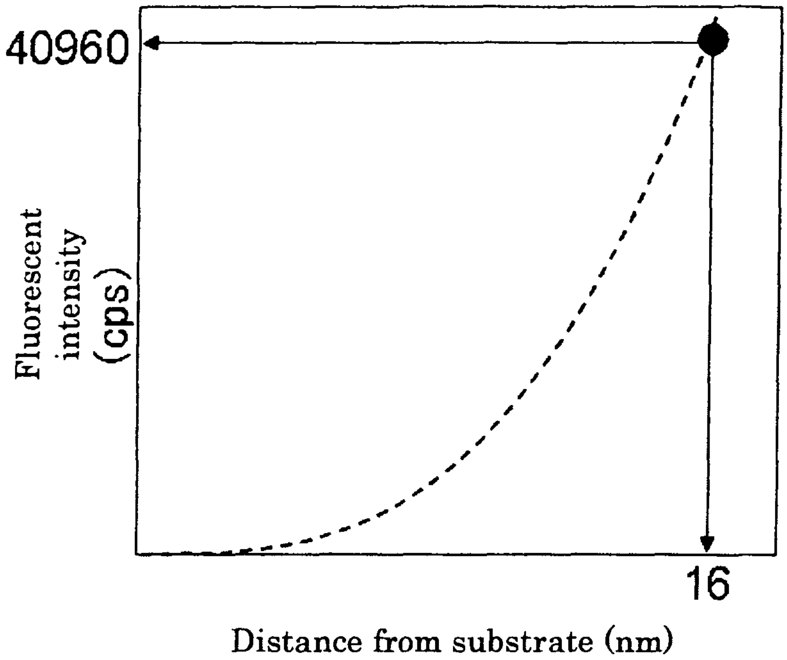
40960
Fluorescent intensity (cps)
16
Distance from substrate (nm)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 06075735 A
- JP 4230431 B
- JP 2007202451 A
- JP 4230431 A

### Non-patent literature cited in the description


- **Cindra A. Widrig ; Carla A. Alves ; Marc D. Porter.** *Journal of the American Chemical Society,* vol. 113, 2805-2810
- **Rant, U. ; Arinaga, K. ; Fujita, S. ; Yokoyama, N. ; Abstreiter, G. ; Tornow, M.** Dynamic electrical switching of DNA layers on a metal surface. *Nano Lett.,* 2004, vol. 4, 2441-2445
- **Tinland, B. ; Pluen, A. ; Sturm, J. ; Weill, G.** Persistence Length of Single-Stranded DNA. *Macromolecules,* 1997, vol. 30, 5763-5765
- **Marko, J. F. ; Siggia, E. D.** Stretching DNA. *Macromolecules,* 1995, vol. 28, 8759-8770